# EUROPEAN PATENT SPECIFICATION

(11) **EP 0 810 913 B1**
(45) Date of publication and mention of the grant of the patent: **16.05.2001**
(21) Application number: 96904362.9
(22) Date of filing: 21.02.1996
(51) Int. Cl.: B23K 26/08

(54) **LASER PROCESSING METHOD**
LASERVERARBEITUNGSVERFAHREN
PROCEDE DE TRAITEMENT PAR LASER

(30) Priority: 21.02.1995 NL 9500331
(43) Date of publication of application: 10.12.1997
(73) Proprietor: BOOTSMAN HOLDING B.V., 2130 AK Hoofddorp (NL)
(72) Inventor: BOOTSMAN, Gerrit, NL-2131 AA Hoofddorp (NL)
(74) Representative: Assendelft, Jacobus H.W.
(86) International application number: NL9600082
(87) International publication number: WO9626040

(56) References cited:
- EP-A- 0 462 842
- DE-A- 4 025 577
- US-A- 4 912 487
- IBM TECHNICAL DISCLOSURE BULLETIN, vol. 26, no. 6, November 1983, pages 2780-2781, XP002005521 "Optical etch-point detection using chromatic aberration"
- TDB (C) IBM CORP. - IBM TECHNICAL DISCLOSURE BULLETIN, vol. 31, no. 8, January 1989, US, pages 214-219, XP002005522 "A technique is described whereby an interferometric apparatus monitors substrate heating when induced by pulsed laser irradiation"

## Description

The invention is concerned with a laser processing method to process a work piece that is temporarily clamped in a clamping element; as well as an apparatus therefore.

It is known to project a laser beam from a laser beam source onto a work piece by using one or more moveable mirrors, and to move the laser beam over the work piece by tilting the mirrors. The work piece, clamped in the clamping element, remains stationair all the time during this. It was found out that this manner of processing is inaccurate, and furthermore there is no device available on the market to process a work piece with dimensions larger then 120 x 120 mm. at one time. The accuracy of the known devices in this art is 0.1 mm to a maximum.

Furthermore, the closest prior art document US-A-4.912.487 teaches a method according to the preamble of claim 1 using a focussing acousto-optic device, adapted for generating extremely accurate patterns, e.g. for application to micro electronics (i.c.'s etc.) and also an apparatus according to the preamble of claim 4. A description is given of the combination of deviding the work piece into several sub area's, for each sub area subsequently covering said sub area with the laser beam in one direction according to line scanning using an acousto-optical system, with intermittent displacement of the work piece in a perpendicular direction, such that the sub area is scanned according to a pattern of spaced parallel lines. The adjacent sub area's have no association. No measures are taken to match the scanning at both sides of the interface between adjacent sub area's within a predetermined accuracy. This known system is further characterised by the application of comparatively expensive parts (type of laser beam source, acousto-optical system, actuator for the clamping element for dispalcement of the work piece) and is therefore inappropriate for the economic production of products of lower technical level compared to micro-electronics.

Furthermore it is known from EP-A-0.462.842 a laser scanner with real-time display of a secondary laser beam, split from the main laser beam scanning the work piece, onto a monitor to immediately show the operator a display of the pattern onto the work piece that is created by the laser beam. Therefore this known system is inappropriate, to subsequently process sub area's in a random fashion, since the laser beam is active during repositioning from one sub area to another, too. This system is further characterised by expensive parts, an a small area of the work piece to be processed at one time too, such that this known system is inappropriate for the efficient production at a technical level lower then that of micro electronics.

The object of the present invention is a laser beam processing method that has a high accuracy and can process much larger area's of the work piece at one time, too, without requiring expensive and/or complicated apparatus, such that the design and reliability of the processing device is optimized, and can be used efficiently, and an apparatus for said method. For this purpose, the invention proposes a laser processing method according to claim 1, and an apparatus according to claim 4.

By making the clamping element, e.g. a processing bed, moveable relative to the laser beam source, the accuracy of the operation surprisingly increases substantially, while it is learned that it is even possible to simplify the design of the apparatus. Furthermore it has been shown, that a work piece area of substantial larger dimensions, e.g. of 1.0 x 1.0 m., can be scanned by the laser beam at one time, without intemediate displacement of the work piece relative to the clamping element. On the one hand this is advantageous for the accuracy of the processing of large surface area's. On the other hand, an important time saving is acquired when processing large work pieces, since little re-clamping and re-positioning is demanded. Advantageous embodiments of the invention are given in the dependent claims. By the combination of a moveable clamping element and one or more tilting mirrors, it is possible now, to subsequently process e.g. several sub area's of the work piece one after the other with comparatively low effort, in which the operation per sub area is largely, e.g. at least 50%, a repetition of the operation carried out in an earlier sub area. The operation per area is then substantially carried out by the tilting mirrors, while the transfer from the one sub area to the other is accomplished by a movement of the clamping element. Then there is no need for re-calculating the control to tilt the mirror elements for the repetitive operations, since during processing of a respective sub area the orientation of the mirror relative to the laser beam source is the same each time. In this way a great number of metal, but plastic as well, labels having substantially the same information can be fabricated quickly and efficient, starting from a large sheet integrating the individual labels, inteconnected e.g. easily detechable (perforations), while the control for the marking can be kept comparibly simple. The operation is further defined in claims 2 and 3.

For an accurate control of the clamping element relative to the laser beam source the application of the so called laser interferometry is preferred. With that the movement of a fixed point on the clamping element or the work piece clamped in it can be monitored. If the movement of that fixed point deviates from a predetermined track, a correction can be carried out relatively easy by means of a correction to the control for movement of the clamping element.

The invention as defined in claim 1 and 4 is based on the understanding that with relatively cheap parts (laser beam source, control of the actuation of the clamping element, control of the deflection of the laser beam to scan the stationary work piece) a convenient accuracy can be met for a work piece of relatively large area, by the combination with a convenient wire less (remote) position- or movement monitoring system, preferably of the laser interferometry type. With that the deviation of the relatively cheap screw type spindle acruator with large hub (more then about 40 cm.) for the movement of the work piece can be compensated effectively .

The invention is furthermore based on the understanding that the relatively accurately controlled movement, preferably of releatively large hub, of the work piece in two substantially perpendicular directions in the combination with the relatively less accurately controled deflection of the laser beam in two substantially perpendicular directions, to scan the stationary work piece with the laser beam in two substantially perpendicular directions, and wherein the process of deflecting the laser beam in at least one direction can be inactivated at wish, ends up with a very flexible device, that can be used for many purposes. For instance one can think of calibrating micro-electronics parts, such as capacities, of which a large number can be positioned next to each other and below each other in rows, and each can be scanned individually exclusively by deflecting of the laser beam, while transfer from the one capacity to the other is done exclusively by movement of the work piece. Another application is e.g. applying a pattern or image on a large area (e.g. 80 x 80 cm.), wherein the area is divided into sub area's. Those sub area's are subsequently scanned by the laser beam, and during said scanning the work piece is stationary, while from the transfer of the one sub area to the other, the laser beam is off or not active. It will be understood that in the embodiment last mentioned, the pattern provided by the laser beam mates accurately at both sides of the interface between two adjacent sub area's. Despite the selection of a relatively inaccurate actuator system with large hub for the clamping element, said accurate mating can be guaranteed with the wire less monitoring system.

By selection of electromagnetic actuated deflection or focussing elements (e.g. mirrors) for the controlled deflection of the laser beam to scan the work piece according to a predetermined pattern, a relatively cheap system is gained, allowing for a relatively high working speed with however a limited working area of 120 x 120 mm. at the most in the presently preferred embodiment. To enlarge the working area, it is further suggested to make the clamping element for the working piece moveable too.

One or more of the controlled deflection or focussing elements can be de-activated by a deflecting or focussing element with a fixed orientation, that can be positioned in the track of the laser beam between the laser beam source and the respective controlled focussing element, e.g. with the aid of a pneumatic actuator. Pneumatic actuation is quick, cheap and reliable.

Another application contemplated is the accurate production of a series of spaced marks over a relatively large length. The accuracy of the spacing and of the alignment of the series is guaranteed by the accurate displacement of the work piece. Each seperate mark can be produced by the controlled deflection of the laser beam. As an illustration, to apply the bar code on a rule, the rule is e.g. moved in its lengthwise direction, while the bars are produced by deflecting the laser beam in cross-wise direction.

A further advantage is that despite the use of a laser beam source of rather cheap type, such as the YAG-type or the CO2-type, a convenient accuracy can be met with the system according to the invention, while a reliable and long life functioning at low maintenance costs can be met. The system for supporting the functioning of the laser beam source can be kept relatively simple as well. A high working speed can be attained. The power consumption is kept as low as possible.

The invention will further be illustrated with reference to embodiments, as shown in the drawings. In the drawings shows:
Fig. 1 a schematic perspective view of the basic design of a laser processing system according to the invention; and
Fig. 2 a schematic perspective view, partly broken, of a presently preferred embodiment of the invention.

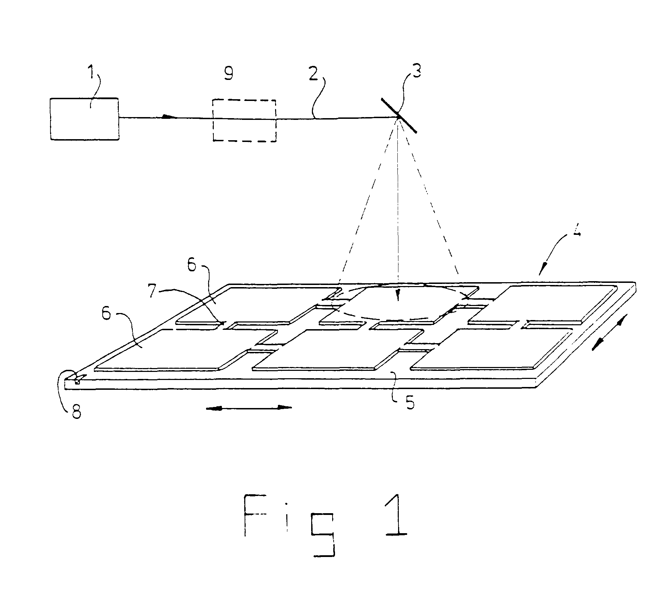

Firts, reference is made to fig. 1. It shows schematically in perspective view a laser processing system according to the invention. There is shown a laser beam source 1, transmitting a laser beam 2. Said laser beam 2 is deflected by a mirror 3, and focussed onto a work piece 4 positioned on a working table 5 that is moveable in its plane. As is indicated with the arrows, the table 5 can be moved both longitudinally and cross wise. Two types of processing are possible with this system:

With the processing of the first type, the mirror 3 is placed in a fixed position. Subsequently the table 5 is moved in its plane, for which reason it is controlled by a processing unit, such as the micro processor of a so called personal computer (not shown). In this way the laser beam 2 will scan the work piece 4, yielding an accuracy of, 0,1 µm., while the dimensions of the table are e.g. 1.0 m. long and 1.0 m. wide. In this way the work piece 4 can be provided with tiny indents or small parallel bars, e.g. a so called bar code with differing bar thicknessess.

With the processing of the second type the mirror 3 is brought in different tilting positions each time with the aid of the control system. For that purpose the laser beam 2 can, with the table 5 stationary, scan the surface of the work piece. However, the active area of the laser beam 2 is then restricted to sub area's of the table 5, e.g. 120 x 120 mm., while the accuracy is limited to 0,1 mm.. It will be understood that the working area can be enlarged or the accuracy can be increased, however that asks for extremely high expenses that form a bar against commercial applictaion. To provide that the laser beam 2 can reach all sub area's of the table 5, and therewith all sub area's of the work piece 4 lying on top of the table 5, the table 5 is intermittently moved. Usually, the table 5 will be moved such that the laser beam 2 will scan the intended sub area of the work piece 4 effectively by the tiltable mirror 3. Then the table 5 is stopped and processing of work piece 4 takes place by control of the tilting mirror 3. Then the table 5 will be moved for a short period after which processing of the next sub area will take place by controling the tilting mirror 3. In this respect, the work piece 4 is e.g. a large number of labels 6 of similar shape and dimensions, that are positioned in parallel rows and are interconnected by e.g. easily disconnectable connecting bodies 7. The labels are made of e.g. metal, such as aluminium. Other materials, such as plastic, glass, paper, zerodur kan be processed. All labels 6 can be processed subsequently by intermittendly moving the table 5 w.r.t. the mirror 3, thereafter by controlling the tilting mirror 3 processing a label 6. Therefater the table 5 is moved again, and then the next label 6 is processed by controlling the tilting mirror 3, etc. In this way, substantial time can be saved if e.g. a large part of the information that should be applied to the labels 6 is shared in common, and e.g. each label 6 differs from the other labels 6 merely by a ranking number or another individual code. In this way, you can work relatively fast, cheap and accurate while the control of the tilting mirror 3 does not have to account for adapting the deflection of the laser beam 2 by the mirror 3 for repetition of the same operation to adjacent sub area's of the work piece 4.

The movement of the table 5 can be monitored by a laser interferometer system (not shown) and a mark 8 on the table 5. The mark 8 kan e.g. be at the work piece 4 too. Especially the last situation offers the advantage, that longer/bigger work pieces can be processed.

Different from the preferred laser processing system as shown and discussed here, apart from the mirror 3 an additional mirror assembly 9 can be applied. In that case the mirror 3 can be exclusively adapted to have a fixed orientation w.r.t. the laser beam source 1. The mirror assembly 9 then can be convenient to control the deflection of the laser beam 2, such that the laser beam 2 is "scanning" the surface of the work piece 4. The mirror 3 and the mirror assembly 9 can e.g. be used together, either fixed or with the mirror assembly 9 moveable. Apart from that, the mirror 3 and/or the mirror assembly 9 can be such that they can be withdrawn, to selectively deflect the laser beam 2, or let it pass without interference. In stead of making a change in the deflection of the laser beam 2 by tilting the mirrors, it will be understood to use controlled translating mirrors, or combinations of translating and tilting mirrors. The invention is not restricted to the type, number and manner of actuation of the mirror. The invention is neither restricted to the type of clamping element. In stead of a table 5, a clamping jaw can e.g. be applied.

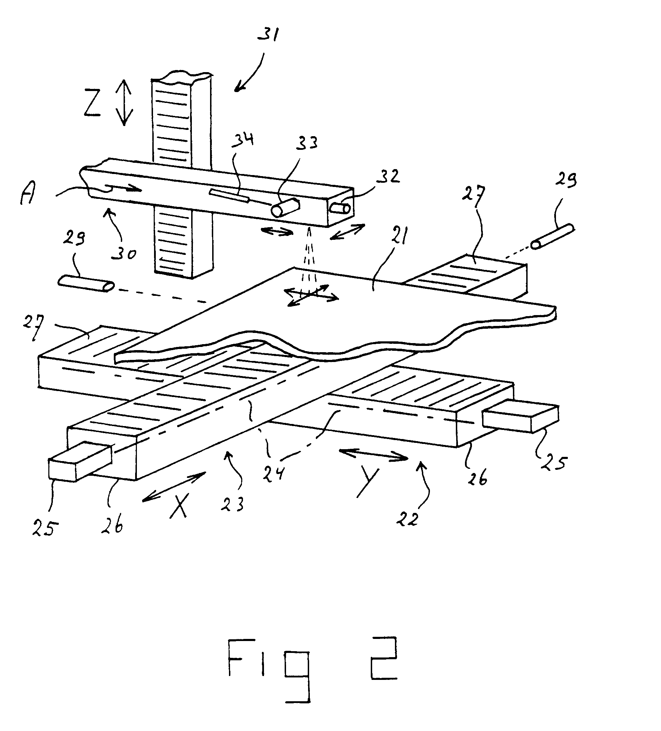

Now reference is made to fig. 2. The laser processing system 20 shown has a clamping table 21, moveable in its plane in two perpendicular directions (X and Y). For that purpose the table 21 is mounted on two substantially perpendicular oriented, linear driving units 22 and 23, crossing each other. The driving unit 23 is for movement in the X-direction. The driving unit 22 is for the movement in Y-direction. Each driving unit comprises a longitudinal, box shaped housing 26, containing a screw spindle 24, The screw spindles have a length of at least 40 cm.; in the preferred embodiment a length of about 90 cm.. Each screw spindle is driven in rotation by a respective electic motor 25, projecting from a frontal end of the housing 26. A walking nut (not shown) is moveable along each screw spindle, as is commonly known in the field of actuating. The walking nut of the driving unit 22 is mechanically mounted to the housing 26 of the driving unit 23. The walking nut of the driving unit 23 in turn is mechanically mounted to the table 21. In this way each movement of the driving unit 22/23 is transmitted to the table 21. The upper side of each housing 24 is open, and covered by a bellows type closure 27. In a way not illustrated the driving unit 22 is placed on a support.

Two laser interferometers 29, for monitoring the X resp. Y position of the table 21, are focussed on respective reflecting elements (not shown) that are e.g. placed at sides of the table 21. The meters 29 are coupled to the controls (not shown) for actuating the driving units 22, 23.

A laser beam source 30 is position above the driving units 22, 23. This source 30 is mounted on a driving unit 31, that is designed in a way similar to that of the driving units 22, 23. However, the driving unit 30 is substantially oriented perpendicular to the plane in which the table 21 moves. In this way the laser beam, propagating from the laser beam source 30 in the direction of arrow A can make a pattern on a work piece (not shown) that projects considerably, e.g. 20 cm., above the table 21. If the thickness of the work piece is considerable, both the top and the sides can be processed by the system 20.

The laser beam source 30 terminates at deflector elements. These elements have a design that is known as such, such to deflect the laser beam over an angle between about 45° and 135°, for projection onto the table 21. These elements comprise two Galvo-heads 32, 33. Galvo head 32 is designed to move the laser beam in the X-plane. Galvo head 33 is designed to move the laser beam in the Y-plane. Both contain electromagnetic actuated tilting mirrors. Furthermore a pneumatic cilinder/piston combination is illustrated, for movement of a mirror of fixed angular orientation. This mirror can be moved into the track of the laser beam, to de-activate one or both Galvo heads 32, 33. The skilled man will understand how to design the Galvo heads and the angularly fixed mirror.

To guarantee the accuracy of the system 20, care has been taken such that the Galvo heads will deflect the laser beam within a limited range, such that the area on the table to be scanned by the laser beam, if the table 21 is stationair, is limited to 120 x 120 mm.

## Claims

1. Method for laser beam processing of a work piece, the work piece (4) is temporarily mounted in a clamping element (5) which can be moved with respect to a laser beam source (1), and wherein the laser beam (2) is scanning a sub area (6) of the work piece in X- and Y-direction, the scanning in one of said directions is provided by deflection of said laser beam, while by movement of the clamping element, controlled by the processing unit, the work piece is moved with respect to the laser beam source such that the laser beam can scan a subsequent sub area of the work piece, characterised in that the scanning in both said directions is provided by deflection of the beam by one or more mirror elements (3, 9) controlled by a processing unit, that by said movement of the clamping element the workpiece is moved with respect to the moveable mirror elements too, and that the movement of the clamping element and the scanning action of the laser beam, respectively, takes place in an alternating manner.

2. Method according to claim 1, the deflection of the laser beam by the mirror elements is by translating or tilting the mirror elements.

3. Method according to claims 1 or 2, wherein the clamping element has driving elements (22, 23) that can provide a hub in two perpendicular directions of at least about 40 cm., and the position of one or more calibration points on the clamping element and/or the work piece is monitored by a wireless, monitoring system (29), said monitoring system compares said measured position with a predetermined calibration position and gives a command at exceeding a difference threshold value to said control system to adapt the functioning of one or both said driving elements of said clamping element to the calibration position, and at transfer from the one to the subsequent sub-area the calibration position of said one or more calibration positions is adjusted such that adjacent subareas are coupled within the accuracy of the laser beam control merely by actuation of the controlled mirror elements.

4. An apparatus for laser beam processing of a work piece (4), said apparatus comprising:
A) a movable clamping elements (5) having a first side and an opposite second side and being adapted for temporarily mounting a work piece (4) thereon;
B) one or more mirror elements (3,32,33) supported in a fixture (31) facing said first side of said clamping element;
C) a laser beam source (1,30) for generating a laser beam (2) incident on said mirror elements;
D) means for moving said clamping element in mutual perpendicular first and second directions parallel to a movement plane and with respect to said mirror elements and said laser beam source;
E) a processing unit controllably connected to said clamping element and said mirror elements for controlling the position of said clamping element and the action of said mirror elements for successively laser beam processing at least two sub area's (6) of said working piece by moving said laser beam from the one sub area to the subsequent sub area by said movement of said clamping element and by successively scanning both said sub areas with said laser beam under control of said mirror elements, characterised in that
F) said mirror elements deflecting said incident laser beam along directions for scanning a work piece mounted on said clamping element; and
G) said means for moving said clamping element having driving elements (24) with a stroke of at least 40 centimeters, the stroke of which is used to move said clamping element in the respective first or second direction.

## Patentansprüche

1. Verfahren zum Laserstrahlbearbeiten eines Werkstückes, der Werkstück (4) ist zeitlich montiert in einer Spannelement (5) beweglich relatief zum Laserstrahlsender (1) und wobei der Laserstrahl (2) eines Teilgebietes (6) des Werkstückes in der X- und Y-richtung abtast, die Abtastung in einer diesen Richtungen ist bewirkt durch abbiegen des Lasertrahles, wobei durch bewegung des Spannelementes, gesteuert durch der Bearbeitungseinheit, das Werkstück bewegt relatief zum Laserstrahlsender sodaß der Laserstrahl ein nächsten Teilgebiet des Werkstückes abtasten kann, dadurch gekennzeichnet, daß das Abtasten in beide Richtungen statt find durch abbiegen des Strahles durch eine oder mehrere Spiegelelemente (3, 9) gesteuert durch einen Bearbeitungseinheit; durch die Bewegung des Spannelementes dem Werkstück auch bewegt relatief zu den bewegbaren Spiegelelementen; und die Bewegung des Spannelementes und die Abtastarbeit des Laserstrahles abwechselnd stattfindet.

2. Verfahren gemäß anspruch 1, die Abbiegung des Laserstrahles von den Spiegelementen ist durch translieren oder kippen der Spiegelelemente.

3. Verfahren gemäß Anspruch 1 oder 2, wobei der Spannelement Antreibelementen (22, 23) hat für einen Hub in zwei orhtogonalen Richtungen von zumindestens ungefähr 40 cm, und die Position einer oder mehrerer Kalibrierpunkten an dem Spannelement und/oder dem Werkstück überwacht ist von ein drahtloses Überwachungsystem (29), wobei das Überwachungsystem die gemessen Position vergleicht mit einem vorbekannten Kalibrierposition und ein Commando gibt an dem Steuerungsystem bei überschreiten ein Differenzdrempelwert zum Anpassen des Functionieren einer oder beide Antreibelemente dieses Spannelementes, und beim Übergang vom eine zum nächsten Teilgebiet der Kalibrierposition der eine oder mehrere Kalibrierpositionen ist angepaßt sodaß nächsten Teilgebieten verbunden werden einsließlich der präzision der Laserstrahlsteuerung nur durch bedienen der gesteuerte Spiegelelemente.

4. Vorrichtung zum Laserstrahlbewerken eines Werkstückes (4), mit:
A) einem bewegbar Spannelement (5) mit einer ersten Seite und einer gegenüberliegenden zweiten Seite und angepaßt zum zeitlichen Montieren eine Werkstück (4) daran;
B) einem oder mehreren Spiegelelemente (3, 32, 33), unterstützt in einem gestell (31) gegenüber der ersten Seite des Spannelementes;
C) eine Laserstrahlsender (130) zum generieren eines Laserstrahles (2) auf diese Spiegelelemente;
D) mitteln zum bewegen dieses Spannelementes in orhogonalle erste und zweite Richtungen parallel zu ein Bewegungsflach und relatief zu dies Spiegelelemente und diese Laserstrahlsender;
E) eine Bearbeitungseinheit steuerbahr verbunden mit dem Spannelement und den Spiegelelementen zum steuern der Position des Spannelementes und dem Betrieb der Spiegelelemente zum nach einander Laserstrahlbearbeiten zumindestens zwei Teilgebiete (6) des Werkstückes durch bewegen des Laserstrahles vom einen Teilgebiet zum nächsten Teilgebiet durch die Bewegung des Spannelementes und durch abtasten beide Teilgebiete mit dem Laserstrahl mit steuerung der Spiegelelemente,
dadurch gekennzeichnet, daß
F) die Spiegelelemente dem auffallende Lasertrahl abbiegen in den Richtungen zum abtasten eines Werkstückes montiert an dem Spannelement; und
G) Die mitteln zum bewegen des Spannelementes haben Antreibelemente (24) mit eine hub von mindestens 40 cm, welche hub brauchbar ist zum bewegen des Spannelementes in der erste und zweite Richtung.

## Revendications

1. Procédé de traitement un objet avec un rayon à laser, le objet (4) est relier à une element (5) de porte mobile relatif à une source à laser (1), le rayon à laser recherche une sub-surface (6) de 1' objet en X- et Y-directions, le recherche en une des directions est avec deflection du rayon à laser, et le translation du element de porte, commande par le dispositif de traitement, produit le translation de l'objet relatif à la source de rayon à laser par consequence le rayon à laser peut recherche une sub-surface successive de l'objet, caractérisé en ce que le recherche en les directions est par deflection du rayon par un ou plusieurs elements (3, 9) à miroir commandé par un dispositif de commande; la translation du element de porte produit aussi la translation de l'objet relatif à les elements à miroir mobile; la translation du element de porte et la recherche du rayon à laser est alternant.

2. Procédé selon la revendication 1, la deflection du rayon à laser par les elements à miroir est par translation ou inclinaison des elements à miroir.

3. Procédé selon la revendication 1 ou 2, 1' element de porte a elements (22, 23) à traction pour entraîner en deux directions perpendiculaire environ 40 cm, et le position de une ou plusiers points de calibration à l'element de porte et/ou l'objet est controlée par une systeme de controle (29), la systeme de controle produit une equation la position determine et une position de calibration prdetermine et commande la systeme de controle pour adapter la functionne de une ou plusieurs elements à traction du element de porte à la position de calibration, et pendant transfert d'une à la successive sub-surface le position de calibration de l'une ou plusieurs positions de calibration est adapter tel que successive sub-surfaces a relier avec une accurete égal à la commande du rayon à laser par actuation des elements à miroir commandée.

4. Dispositif de traitement un objet (4) avec un rayon à laser, comprend:
A) un element (5) de porte mobile avec une cote primaire et une cote secundaire et pour porter un objet (4);
B) une ou plusieurs elements (3, 32, 33) à miroir, porte par un element de fixation (31) en face à la primaire cote du element de porte;
C) une source (130) de rayon à laser pour un rayon (2) à laser dirigée à les elements à miroir;
D) moyens de mouvement l'element de porte en premiere et secundaire directions orthogonal, parallel à une plane de mouvement et relatif à les elements à miroir et la source de rayon à laser;
E) un dispositif de traitement relier à controle avec l'element de porte et les elements à miroir tel que la position du element de porte et l'action les elements à miroir est commandée pour successivement traitement par rayon à laser deux sub-surfaces (6) du objet par movement le rayon à laser depuis l'une des sub-surfaces à la sub-surface successive par movement du element de porte et par successivement rechercher les sub-surfaces avec le rayon à laser par commande des elements à miroir; caractérisé en ce que
F) les elements à miroir deflecter les rayon à laser incident en directions pour rechercher un objet relier à l'element de porte; et
G) les moyens de movement l'element de porte a elements (24) à traction avec une largeur d'environ 40 cm, appliquer pour le movement de l'element de porte en le primaire et secundaire direction.
